Europäisches Patentamt

European Patent Office

Office européen des brevets

(19)

(11) Numéro de publication : **0 299 885 B1**

## (12) FASCICULE DE BREVET EUROPEEN

(45) Date de publication du fascicule du brevet :
13.11.91 Bulletin 91/46

(51) Int. Cl.⁵ : **B65H 29/22, B65H 29/24**

(21) Numéro de dépôt : 88420231.8

(22) Date de dépôt : 29.06.88

(54) Procédé et machine de formation d'un empilage à plat de feuilles de format prédéterminé.

(30) Priorité : 30.06.87 FR 8709431

(43) Date de publication de la demande :
18.01.89 Bulletin 89/03

(45) Mention de la délivrance du brevet :
13.11.91 Bulletin 91/46

(84) Etats contractants désignés :
AT BE CH DE ES FR GB GR IT LI LU NL SE

(56) Documents cités :
EP-A- 0 066 526
FR-A- 1 496 628
US-A- 3 304 822

(73) Titulaire : COOPELIN, Société à
Responsabilité Limitée
B.P. 172 Maubec
F-38300 Bourgoin Jallieu (FR)
Titulaire : SOCIETE NATIONALE
INDUSTRIELLE AEROSPATIALE Société dite:
37 Boulevard de Montmorency
F-75781 Paris Cedex 16 (FR)

(72) Inventeur : Jennet, Michel
Lot 29 La Salière Ruy
F-38300 Bourgoin Jallieu (FR)
Inventeur : Luce, Jean-Claude, Gilbert Michel
47, rue Louise Michel
F-44340 Bouguenais (FR)

(74) Mandataire : Ropital-Bonvarlet, Claude
Cabinet BEAU DE LOMENIE, 51, avenue
Jean-Jaurès
F-69007 Lyon (FR)

## Description

La présente invention concerne le domaine de l'empilage de feuilles, de même format prédéterminé, devant être rigoureusement superposées, de manière à permettre l'exécution ultérieure de phases de traitement, de conformation ou d'exécution, selon le caractère spécifique de l'usage ou de l'application auquel un tel empilage est destiné.

L'invention concerne, plus précisément, le domaine technique de la fabrication de structures alvéolées du type nid d'abeilles.

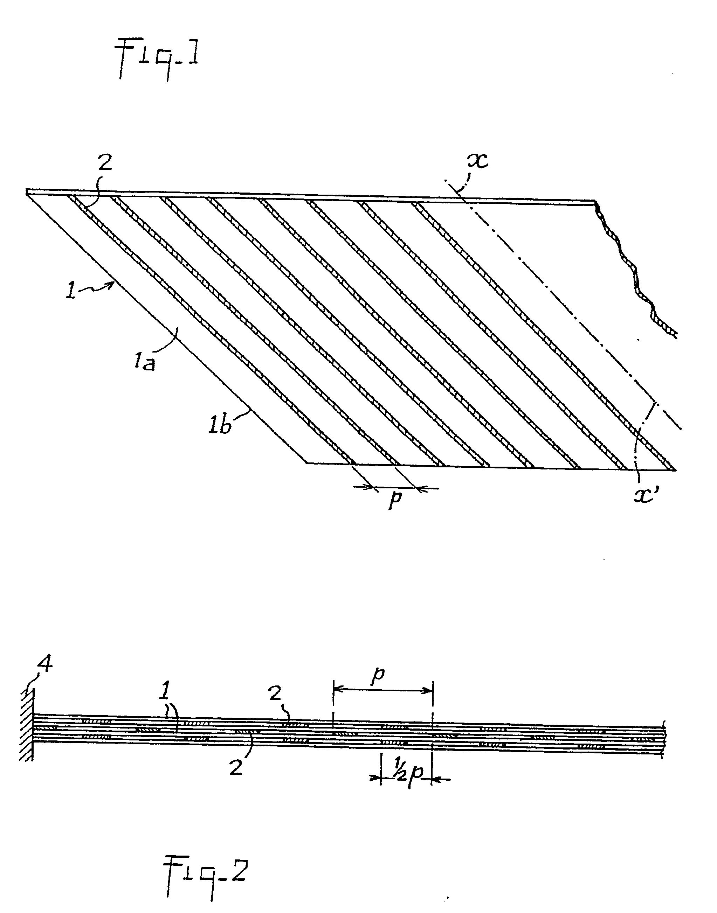

La fabrication d'une structure alvéolée fait intervenir l'empilage de feuilles 1, telles qu'illustrées par la fig. 1. De telles feuilles, de même format, sont, initialement, revêtues sur l'une de leurs faces, par exemple 1a, de raies de colle 2 équidistantes selon un pas p et s'étendant, généralement, parallèlement entre elles et à un axe médian longitudinal, tel que x-x'.

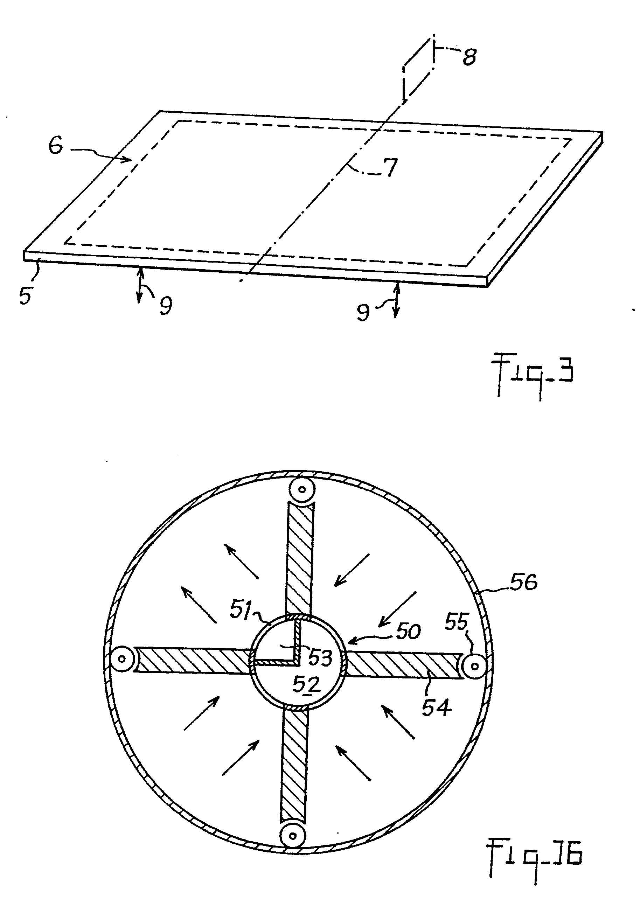

Les feuilles 1 sont empilées de façon superposée, comme illustré par la fig. 2, suivant une même orientation, pour que les raies de colle 2 d'une feuille soient appliquées sur la face non encollée d'une feuille immédiatement inférieure.

En vue de l'obtention d'une structure alvéolée, les feuilles superposées sont aussi décalées, alternativement, parallèlement à la direction générale des raies 2, d'une mesure correspondant à un demi-pas (1/2 p) d'écartement de ces raies.

Un empilage de feuilles 1 ainsi constitué est ensuite disposé dans une presse assurant, par elle-même ou indirectement, une fusion des raies de colle pour solidariser les feuilles.

Pour réaliser l'empilage, la technique antérieure, notamment par le brevet FR-A-1496628, a proposé de superposer les feuilles en partant d'une butée de référence 4 contre laquelle un bord de chaque feuille, parallèle à l'axe x-x', est appliqué (fig. 2). Selon un autre mode de réalisation (figure 3) la feuille est d'abord enroulée sur un cylindre au dessous duquel est agencée une table déplaçable verticalement. Lorsque la table, mise en contact avec la feuille enroulée sur la tambour, est déplacée horizontalement, la feuille est déroulée et déposée sur la table.

Cette technique d'empilage s'est avérée insatisfaisante pour deux raisons principales au moins.

Les feuilles 1 utilisées sont, généralement, issues de films, nappes ou bandes de faible épaisseur, ne leur conférant qu'une faible tenue propre, notamment à la torsion. Il en résulte des distorsions de coupe de chaque feuille et une impossibilité de garantir une superposition rigoureuse à partir d'un simple appui sur une butée 4.

Les machines automatiques, chargées de déposer les raies de colle 2 successives, ne sont, généralement, pas capables de respecter une grande précision du pas p d'écartement entre les raies 2 successives.

Ces deux raisons sont responsables d'un décalage relatif, parfois important, entre les raies de colle de deux feuilles successivement empilées, de sorte que l'opération de collage ultérieure s'avère défectueuse et impropre à l'obtention d'une structure alvéolée à cellules régulières.

Ces deux raisons sont la cause des difficultés rencontrées pour obtenir, par fabrication automatique, des structures assemblées nécessitant l'alternance de raies de colle.

La présente invention vise à remédier aux inconvénients ci-dessus en proposant un nouveau procédé de formation d'un empilage à plat de feuilles de format prédéterminé identique.

Selon l'invention, le procédé de formation d'un empilage à plat de feuilles de format prédéterminé identique est caractérisé en ce qu'il consiste à :

— assurer l'enveloppement au moins partiel d'une feuille sur un dispositif de prise en charge et d'application composé d'un premier et d'un second cylindres tournants, parallèles entre eux, disposés au-dessus d'un plan d'application définissant un gabarit de pose dont l'axe médian est référencé et qui est revêtu d'une première feuille, en faisant en sorte que la feuille à empiler soit enroulée sur le premier cylindre par sa face dépourvue de raies de colle,

— compter le nombre de raies de colle défilant pendant l'enveloppement,

— arrêter la rotation des cylindres lorsque la raie médiane de la feuille est décomptée et se trouve approximativement située à l'aplomb de l'axe médian,

— mesurer l'écart entre la position de cette raie et l'axe médian du gabarit de pose,

— ajuster la position du dispositif pour faire coïncider verticalement la raie médiane avec l'axe médian,

— faire monter le plan d'application en direction du dispositif,

— assurer l'immobilisation de la feuille à empiler sur la précédente par fusion localisée de la raie médiane de colle,

— écarter les deux cylindres pour dérouler les deux demi-parties de la feuille à empiler et l'appliquer sur la précédente,

— descendre le plan d'application,

— rapprocher les cylindres,

— et prendre en charge une feuille suivante dans les mêmes conditions en prévoyant, supplémentairement, après la mesure d'ajustement entre la raie médiane et l'axe médian, un décalage de cette raie de part et d'autre de l'axe, alternativement, d'une mesure égale à un demi-pas.

L'invention a également pour objet une machine pour la mise en oeuvre du procédé.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une perspective d'un des éléments constitutifs d'une structure nécessitant l'alternance de raies de colle.

La **fig. 2** est une vue schématique illustrant une phase du procédé général de formation d'une structure alvéolée, au sens de la technique antérieure.

La **fig. 3** est une vue en perspective illustrant un élément constitutif de l'objet de l'invention.

Les **fig. 4 à 8** sont des vues schématiques montrant un exemple de mise en oeuvre du procédé de l'invention.

Les **fig. 9 à 13** sont des vues schématiques illustrant une variante de mise en oeuvre du procédé.

La **fig. 14** est une élévation schématique d'une installation ou machine pour la mise en oeuvre du procédé.

La **fig. 15** est une perspective schématique, en vue éclatée, de certains des éléments constitutifs selon la **fig. 14**.

La **fig. 16** est une coupe transversale montrant, à plus grande échelle, un élément caractéristique de la machine conforme à l'invention.

Le procédé de l'invention concerne la formation d'un empilage à plat de feuilles, de format prédéterminé identique, telles que la feuille **1** illustrée à la **fig. 1**, en vue de la formation d'une structure nécessitant l'alternance de raies de colle. Le procédé de l'invention ne concerne donc pas la technique et/ou le matériel mis en oeuvre pour délivrer des feuilles **1** et pour les encoller. Ces matériels doivent être considérés comme faisant partie de la technique antérieure.

Le procédé de l'invention consiste, tout d'abord, comme cela est illustré par la **fig. 3**, à disposer d'un plan d'application **5** définissant un gabarit de pose **6** correspondant au format des feuilles **1** à empiler. Le gabarit **6** est matérialisé par un axe médian de pose **7** transversal à la plus grande longueur du format des feuilles **1**. L'axe médian transversal **7** est, généralement, placé en relation avec un système repère **8** extérieur au plan **5** et de toute appropriée.

Le plan d'application **5** est monté sur des organes **9** ascenseurs-descenseurs qui peuvent être réalisés de toute façon convenable. Les organes **9** peuvent, notamment, être formés par des vérins hydrauliques, pneumatiques, voire électriques constituant, directement ou indirectement, les jambes de support du plan d'application **5**.

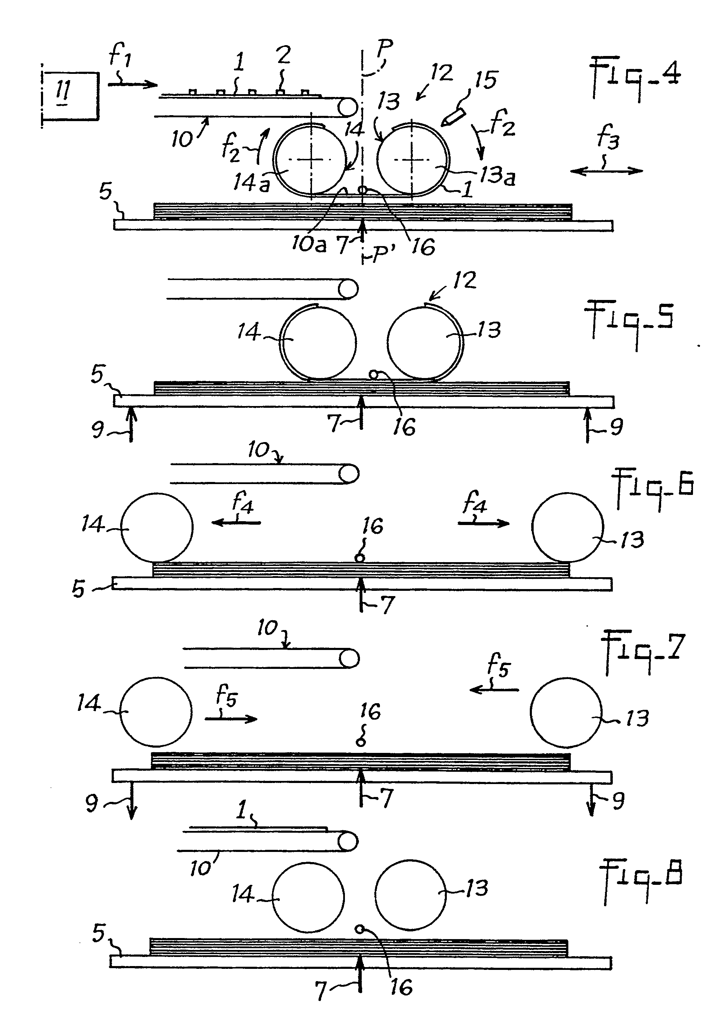

Comme cela est illustré par la **fig. 4**, le plan d'application **5** est disposé en dessous et parallèlement à un plan **10** d'amenage de feuilles **1** préalablement encollées. Le plan **10** peut, par exemple, être formé par un transporteur sans fin, chargé d'assurer le déplacement de chaque feuille **1** dans le sens de la flèche $f_1$, à partir d'un poste **11** de coupe et/ou d'encollage. Le transporteur **10** est chargé de déplacer chaque feuille **1** en assurant son support, de manière que les raies de colle **2** soient tournées vers le haut.

Le procédé de l'invention fait intervenir, entre le plan **5** et le plan **10**, un dispositif **12** de prise en charge et d'application de chaque feuille **1** sur le plan **5**. Le dispositif **12** est constitué par un duo de cylindres comprenant un cylindre premier **13** et un cylindre second **14** d'axes parallèles, disposés de part et d'autre d'un plan médian vertical **P-P'** passant par le repère **8** et l'axe **7**. Les cylindres **13** et **14** sont, respectivement, constitués par une structure fixe et par une enveloppe cylindrique tournante perforée. La structure fixe et l'enveloppe tournante perforée définissent des secteurs angulaires pouvant être mis en relation sélectivement avec des circuits de mise en pression et/ou en dépression.

Dans l'exemple illustré selon les **fig. 4 à 8**, les cylindres **13** et **14** tournent dans le même sens, selon la flèche $f_2$, et comportent des secteurs **13a** et **14a** placés en opposition, de part et d'autre du plan médian **P-P'**, couvrant sensiblement 180° et susceptibles d'être mis en relation avec un ou deux circuits de mise en dépression.

La première phase du procédé de l'invention consiste à amener une feuille **1** par le plan **10**, de manière à la faire chuter par gravité sur la partie supérieure du secteur **13a** du cylindre premier **13**. Le secteur **13a** est mis en relation avec le circuit de mise en dépression qui crée, sur toute la périphérie angulaire du secteur **13a**, un effet d'aspiration permettant, par la rotation de l'enveloppe tournante perforée, de prendre en charge la feuille **1** au fur et à mesure de sa présentation par le plan **10**. La feuille **1** s'enroule ainsi à la périphérie du cylindre **13** qu'elle quitte après un enveloppement d'environ 180°. La feuille **1** est ensuite prise en charge, par le secteur en dépression **14a** du cylindre **14**, qui assure son enveloppement également sur environ 180°.

L'enveloppement de la feuille **1** sur le duo de cylindres a ainsi pour effet de laisser subsister, entre les cylindres, une partie de feuille **10a** tendue, s'étendant, généralement, de façon horizontale et parallèle au plan **5**.

L'enveloppement de la feuille **1** sur le duo de cylindres **13** et **14** est contrôlé par un lecteur **15** chargé de compter le nombre de raies de colle **2** défilant depuis le premier bord transversal de la feuille **1**. Le comptage des raies **2** a pour objet de déterminer la présence et la position de la raie **2** médiane, correspondant à l'axe **x-x'**, en relation avec, soit le repère **8**, soit l'aplomb de l'axe médian transversal **7** du gabarit **6**. Lorsque l'une ou l'autre de ces deux conditions est remplie, le lecteur **15** interrompt la rotation des cylindres **13** et **14**.

Un moyen de mesure, tel que le repère **8**, est alors chargé de mesurer l'écart effectif existant entre les plans verticaux passant par la raie médiane **x-x'**

de la feuille 1 et l'axe médian transversal 7. La mesure de cet écart est déterminée pour déplacer le duo d. cylindres dans l'un ou l'autre des sens de la flèche $f_3$ et ramener ainsi la raie médiane à l'aplomb de l'axe médian 7.

Après la compensation d'écart et lorsque la feuille 1 est la première à être déposée, le plan d'application 5 est élevé par les moyens 9, comme illustré par la **fig. 5**, de manière à assurer l'application, soit de sa surface de pose, soit de la dernière feuille empilée contre les cylindres 13 et 14 du duo 12.

Dans cette position, des moyens 16 de chauffage localisé de la raie médiane **x-x'** sont activés, de manière à assurer le collage partiel de la feuille 1 enveloppant les cylindres 13 et 14 sur une première feuille de base recouvrant le plan 5. Les moyens 16 peuvent consister, dans le cas présent, en une suite d'électrodes disposées dans le plan **P-P'** et susceptibles d'être chauffées sélectivement, par élément ou par groupe d'éléments.

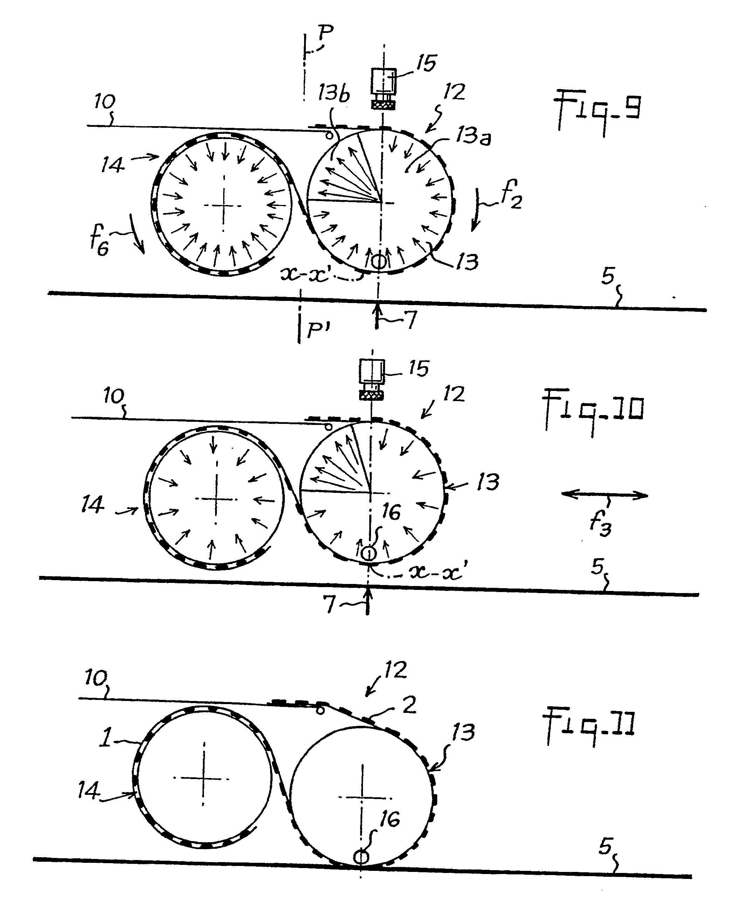

Après collage partiel de la feuille enveloppant les cylindres 13 et 14, le dispositif d'application 12 est commandé, de manière à provoquer, comme cela ressort de la **fig. 6**, l'écartement des cylindres 13 et 14, dans les sens opposés selon les flèches $f_4$. L'écartement relatif des deux cylindres 13 et 14 produit le déroulement simultané des deux demi-parties de la feuille 1, ainsi que l'application de ces deux demi-parties sur la feuille de base recouvrant le plan 5. La phase d'écartement, selon les flèches $f_4$, réalise une application parfaitement répartie des demi-parties de la feuille avec, simultanément, expulsion de l'air pouvant être emprisonné entre ces demi-parties et la feuille précédente.

Dans une phase subséquente, illustrée par la **fig. 7**, le plateau 5 est descendu par l'intermédiaire des organes 9, de manière à permettre ensuite la commande de rapprochement, dans le sens de la flèche $f_5$, des cylindres 13 et 14.

Les **fig. 4 à 8** illustrent le cycle élémentaire de fonctionnement correspondant au procédé de l'invention. Chaque cycle successif se déroule de la même façon pour les différentes feuilles à empiler. Toutefois, le cycle d'application de chaque feuille après la première fait intervenir, en plus de ce qui a été décrit ci-dessus, la prise en compte, après compensation d'alignement entre la raie médiane **x-x'** et l'axe médian transversal 7, d'un décalage de la raie médiane, d'une valeur d'un demi-pas (1/2 p), comme illustré par la **fig. 2**, de manière à respecter le principe de base permettant l'obtention ultérieure d'une structure nécessitant l'alternance de raies de colle.

En d'autres termes, le procédé de l'invention consiste, par l'intermédiaire d'un dispositif d'application 12 du type à cylindres aspirateurs, à prendre en charge chaque feuille à empiler, à assurer l'enveloppement au moins partiel de cette feuille pour aligner la raie médiane de colle de cette feuille avec une référence fixe correspondant à l'axe médian transversal d'un gabarit, à compenser l'erreur d'alignement susceptible d'exister dans la position d'arrêt du dispositif d'application, puis à décaler d'un demi-pas la position de la raie médiane par rapport à la raie médiane de la feuille sous-jacente en agissant, successivement, dans un sens et dans l'autre pour chaque feuille successive, puis, ensuite, à assurer la dépose avant de provoquer le déroulement simultané des deux demi-parties de la feuille.

Cette façon de procéder permet de diviser par deux les incertitudes d'alignement par rapport à la méthode classique consistant à assurer la dépose d'une feuille en plaçant l'un de ses bords transversaux en relation avec une référence extrême et en assurant, ensuite, le déploiement de toute la surface de la feuille dans le même sens.

La **fig. 9** illustre une variante selon laquelle le dispositif d'application, constitué par le duo de cylindres 12, comprend un premier cylindre 13 tournant dans le sens de la flèche $f_2$ et un second cylindre 14 tournant dans le sens inverse selon la flèche $f_6$. Dans la position de prise en charge et d'application, le duo de cylindres 12 est disposé, de manière que le plan vertical, passant par l'axe du premier cylindre, soit aligné sensiblement avec l'axe médian transversal 7 du plan 5.

Le premier cylindre 13 comporte un secteur d'aspiration **13a** couvrant, sensiblement, trois quarts de sa périphérie, alors que toute la périphérie du cylindre 14 est soumise à un effet de dépression.

La prise en charge d'une feuille 1 s'effectue, comme dans l'exemple précédent, par enroulement sur l'enveloppe perforée tournante du premier cylindre 13, de telle manière que les raies de colle 2 soient orientées vers l'extérieur. L'enroulement sur le premier cylindre s'effectue sur environ 270°, au-delà desquels la feuille est prise en charge par l'effet d'aspiration, créé à travers l'enveloppe perforée tournante du cylindre 14. Pour faciliter le transfert, le premier cylindre 13 comporte, avantageusement, un secteur **13b** en relation avec un circuit de mise en pression. Le soufflage localisé qui en résulte favorise le décollement de la feuille par rapport à l'enveloppe et sa prise en charge par l'effet d'aspiration du cylindre 14 sensiblement contigu. L'enroulement qui en résulte s'assimile à un cheminement en forme de huit, par enveloppement successif partiel des cylindres 13 et 14.

Comme précédemment, l'enroulement, tel que décrit ci-dessus, est apprécié par le lecteur 15 chargé de déterminer la position de la raie médiane **x-x'** de la feuille enveloppée, en relation avec le plan vertical passant par l'axe médian 7. Lorsque cette position est appréciée, le dispositif 12 est déplacé, dans l'un ou l'autre sens de la flèche $f_3$, pour aligner exactement la raie médiane **x-x'** avec l'axe 7, avant de procéder à un décalage alternatif d'un demi-pas (1/2 p) (fig.

10).

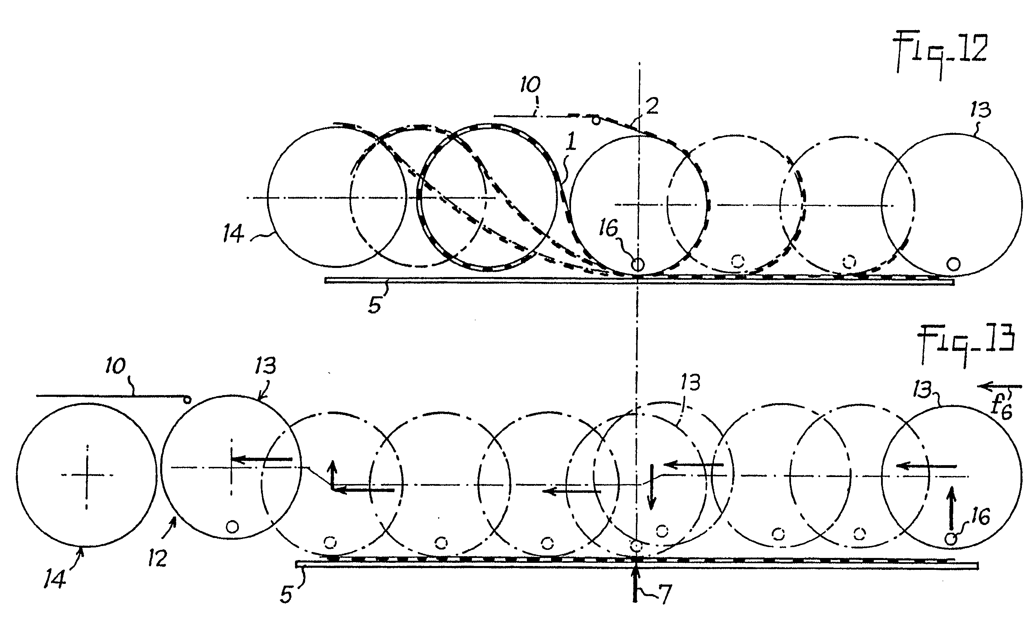

La **fig. 11** montre que, dans cette position, un déplacement vertical relatif est commandé pour appliquer la raie médiane **x-x'** sur la dernière feuille empilée et portée par le plan **5**. Un tel déplacement relatif consiste, par exemple, à déplacer en abaissement le cylindre **13**, de manière à laisser subsister un intervalle entre le cylindre **14** et la feuille précédente. Dans cette position, des moyens **16** sont mis en oeuvre pour assurer le collage localisé de la raie médiane **x-x'** de la feuille enroulée. Les moyens **16** peuvent consister en une rampe portée par la structure fixe du cylindre **13** et susceptible d'être alimentée par un moyen de chauffage connu pour assumer la même fonction que celle des moyens décrits précédemment.

Après collage partiel de la feuille, les cylindres **13** et **14** sont commandés en écartement relatif, selon les flèches **f₄**. Le cylindre **13**, en contact avec la feuille sous-jacente, réalise une application directe de la demi-partie correspondante de la feuille **1**, avec expulsion de l'air. Le cylindre **14** assure un dépôt, par glissement relatif de la seconde demi-partie de feuille, comme illustré par la **fig. 12**.

La phase d'écartement est ensuite suivie d'une phase de rapprochement des cylindres **13** et **14**, pour ramener le duo de cylindres **12** dans la position initiale.

Dans une variante de réalisation, il peut être prévu de placer le duo de cylindres dans une première position de prise en charge, décalée latéralement par rapport à la position d'application correspondant à l'alignement de la raie médiane **x-x'** avec l'axe médian transversal **7**. Dans un tel cas, à la suite de la phase d'écartement selon la **fig. 12**, le cylindre **13** est relevé, comme illustré par la **fig. 13**, puis les cylindres **13** et **14** sont commandés en déplacement dans le sens de la flèche **f₆**. Le déplacement dans ce sens permet de ramener le cylindre **14** dans sa position initiale et d'amener le cylindre **13** sensiblement à l'aplomb de l'axe médian transversal **7**. Dans cette position, le cylindre **13** est de nouveau abaissé pour parcourir la deuxième partie de surface de la feuille appliquée et, ainsi, chasser convenablement et totalement l'air pouvant être inclus entre cette deuxième partie et la feuille sous-jacente. Au terme de sa progression sur la surface correspondant à la demi-partie de la feuille, le cylindre **13** est alors relevé pour être ramené dans sa position de coopération avec le cylindre **14** dans l'état ou la position de prise en charge pour le déroulement d'un autre cycle, tel que décrit ci-dessus.

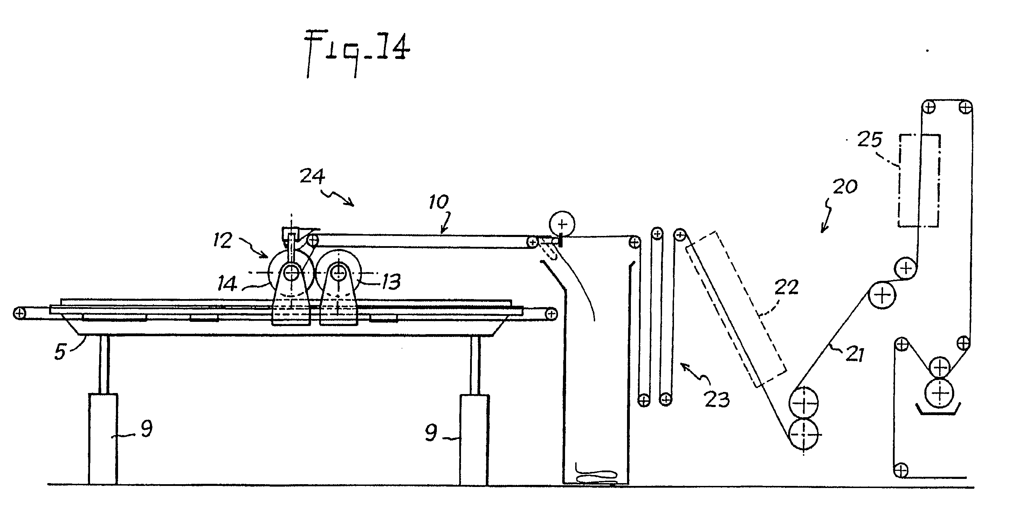

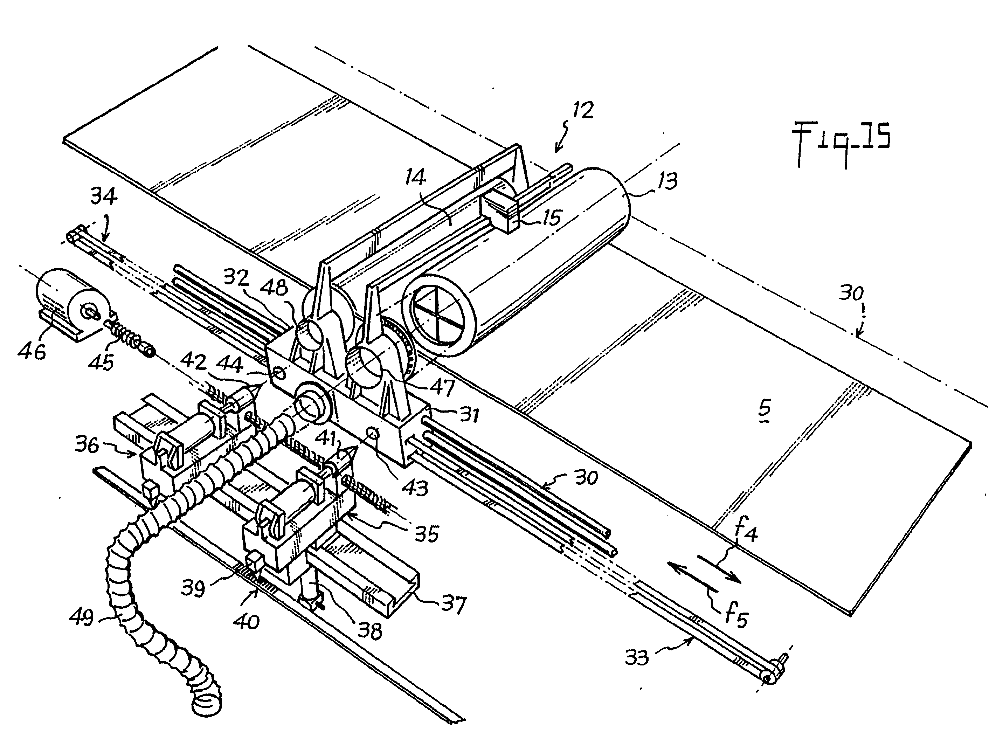

Les **fig. 14** et **15** montrent, à titre d'exemple, une construction possible d'une machine pour la mise en oeuvre des procédés décrits précédemment. Une telle machine est prévue pour être associée à une installation **20** de défilement en continu d'une bande **21** de toute matière appropriée, dévidée à partir d'une bobine, non représentée. La bande **21** progresse à travers une enceinte **22** d'examen et de contrôle, équipée de tout moyen approprié capable de détecter les défauts de la bande. A l'issue de l'enceinte **22**, la bande **21** est prise en charge par un magasin d'accumulation **23** amenant la feuille à une machine de pose et d'empilage **24**. L'installation **20** comporte, de façon connue, un poste **25** chargé de déposer sur l'une des faces de la bande **21** les raies de colle **2**.

La machine **24** comporte, de façon habituelle, un bâti ou une ossature, non représenté aux dessins, chargé d'assurer le support de ses différents organes constitutifs et, notamment, du plan **5**, du plan superposé **10** et des moyens de support du duo **12**. Ces moyens de support consistent, principalement, en des systèmes de glissières **30** assurant le support et le guidage de deux châssis **31** et **32** portant, respectivement, les cylindres **13** et **14**. Chaque châssis **31** et **32** est associé à un système **33** et **34** de motorisation individuelle, dans le sens des flèches **f₄** et **f₅**. Les systèmes de motorisation **33** et **34** peuvent faire intervenir deux moteurs indépendants ou un seul moteur avec un dispositif de transmission et d'embrayage.

Les châssis **31** et **32** sont prévus pour coopérer avec des unités d'indexage **35** et **36** montées sur un banc de support et de guidage **37** définissant un rail de coulissement. Les unités **35** et **36** sont chacune pourvues d'un moyen de bridage **38** susceptible de les immobiliser dans une position précise pouvant être déterminée par un lecteur **39** placé en coopération avec les graduations d'une règle de mesure **40**. Les unités d'indexage **35** et **36** portent des broches extensibles **41** et **42**, par exemple commandées par des vérins hydrauliques et dont les têtes tronconiques sont destinées à coopérer avec des logements complémentaires **43** et **44** présentés par les châssis **31** et **32**. Les unités **35** et **36** sont accouplées à une transmission unique **45**, actionnée par un moteur **46** à double sens de rotation.

Une forme de réalisation appropriée des châssis **31** et **32** réside en une construction en portique permettant de délimiter, sur les jambages situés d'un même côté, des paliers **47** et **48**, susceptibles d'être placés en relation avec des circuits **49** de mise en pression ou en dépression. Les paliers **47** et **48** assurent le support de la structure fixe **50** de chaque cylindre **13** ou **14**, illustré par la **fig. 16**. La structure fixe **50** peut, par exemple, être formée par un mandrin tubulaire **51** divisé intérieurement, par des cloisons convenablement agencées, en un ou plusieurs circuits **52** ou **53** de mise en pression ou dépression. Le mandrin tubulaire **51** porte des cloisons radiales extérieures **54** munies en bout de rouleaux **55** assurant le centrage et le support d'une enveloppe cylindrique **56** tournante, de faible épaisseur, perforée sur toute sa surface. Par la disposition ci-dessus, il devient possible de délimiter, entre le mandrin **51** et l'enveloppe **56**, des secteurs susceptibles d'être mis en relation avec des circuits de mise en pression ou de mise en dépression. Les paliers **47** et **48** su ...rtent, de façon non représentée, des moyens d'en. ...nement en rotation individuelle des enveloppes **56** des cylindres **13** et **14**.

L'invention n'est pas limitée aux exemples décrits et représentés, car diverses modifications peuvent y être apportées sans sortir de son cadre.

## Revendications

1. Procédé de formation d'un empilage à plat de feuilles de format prédéterminé, pourvues sur l'une de leurs faces de raies parallèles de colle à écartement ou pas (p) constant, caractérisé en ce qu'il consiste à :

    — assurer l'enveloppement au moins partiel d'une feuille sur un dispositif de prise en charge et d'application composé d'un premier et d'un second cylindres tournants, parallèles entre eux, disposés au-dessus d'un plan d'application définissant un gabarit de pose dont l'axe médian est référencé et qui est revêtu d'une première feuille, en faisant en sorte que la feuille à empiler soit enroulée sur le premier cylindre par sa face dépourvue de raies de colle,

    — compter le nombre de raies de colle défilant pendant l'enveloppement,

    — arrêter la rotation des cylindres lorsque la raie médiane de la feuille est décomptée et se trouve approximativement située à l'aplomb de l'axe médian,

    — mesurer l'écart entre la position de cette raie et l'axe médian du gabarit de pose,

    — ajuster la position du dispositif pour faire coïncider verticalement la raie médiane avec l'axe médian,

    — faire monter le plan d'application en direction du dispositif,

    — assurer l'immobilisation de la feuille à empiler sur la précédente par fusion localisée de la raie médiane de colle,

    — écarter les deux cylindres pour dérouler les deux demi-parties de la feuille à empiler et l'appliquer sur la précédente,

    — descendre le plan d'application,

    — rapprocher les cylindres,

    — et prendre en charge une feuille suivante dans les mêmes conditions en prévoyant, supplémentairement, après la mesure d'ajustement entre la raie médiane et l'axe médian, un décalage de cette raie par rapport à l'axe, alternativement, d'une mesure égale à un demi-pas.

2. Procédé selon la revendication 1, caractérisé en ce que la prise en charge de chaque feuille est assurée par effet d'aspiration, à partir des cylindres, en combinaison avec la rotation de ces derniers.

3. Procédé selon la revendication 1 ou 2, caractérisé en ce que la prise en charge de chaque feuille est assurée par enroulement partiel à la périphérie de chaque cylindre.

4. Procédé selon l'une des revendications 1 à 3, caractérisé en ce qu'il consiste à écarter les cylindres de part et d'autre de la position d'application en les déplaçant sensiblement parallèlement à et en contact avec la dernière feuille empilée, à descendre le plan d'application, puis à ramener les cylindres dans la position de prise en charge.

5. Procédé selon l'une des revendications 1 à 4, caractérisé en ce qu'il consiste à assurer l'enveloppement de la feuille à appliquer sur le premier cylindre et sur sensiblement la moitié de la périphérie de ce dernier, puis sur le second cylindre tournant dans le même sens que le premier et aussi sur sensiblement la moitié de la périphérie de ce dernier.

6. Procédé selon l'une des revendications 1 à 4, caractérisé en ce qu'il consiste à assurer l'enveloppement de la feuille à appliquer sur le premier cylindre et sur sensiblement trois quarts de la périphérie de ce dernier, puis sur le second cylindre tournant en sens inverse du premier et sur environ aussi trois quarts de la périphérie de ce dernier.

7. Procédé selon l'une des revendications 1 à 3 et 6, caractérisé en ce qu'il consiste à écarter les cylindres, à partir de la position d'application, en les déplaçant sensiblement parallèlement et en contact avec la dernière feuille empilée, à relever les deux cylindres, à ramener le second cylindre dans la position de prise en charge et le premier cylindre dans la position d'application, à abaisser le premier cylindre contre la feuille venant d'être appliquée, à déplacer le premier cylindre en direction de la position de prise en charge contre la seconde moitié de la feuille venant d'être appliquée, à relever ce premier cylindre puis à le ramener dans la position de prise en charge à proximité du second cylindre.

8. Procédé selon la revendication 6 ou 7, caractérisé en ce que l'immobilisation de la feuille est assurée, après enveloppement et avant écartement des cylindres, par un moyen de chauffage porté par le premier cylindre.

9. Machine pour la mise en oeuvre du procédé selon l'une des revendications 1 à 8, comprenant :

    — un plan d'application (**5**) horizontal porté par des moyens (**9**) ascenseur-descenseur et délimitant un gabarit de pose (**6**) définissant un axe transversal médian (**7**),

    — un plan superposé (**10**) d'amenage individuel de feuilles (**1**) porteuses de raies de colle (**2**), reposant sur le plan par leur face non encollée,

    — entre les deux plans, un duo (**12**) de cylindres aspirateurs (**13, 14**) d'axes horizontaux parallèles, disposés de part et d'autre d'un plan médian vertical (**P-P'**), montés sur des châssis (**31, 32**) portés par deux systèmes (**30**) de glissières parallèles au plan d'application et reliés à des moyens d'aspiration (49),

— des moyens (15) de comptage de la raie de colle médiane (x-x') de chaque feuille en relation avec la position de référence de l'axe transversal médian du gabarit,

— des moyens (35, 36) d'indexage et de bridage simultanés des châssis dans une position de référence de la raie médiane de colle de chaque feuille par rapport à l'axe médian du gabarit du plan d'application,

— des moyens (16) de collage localisé de la raie médiane de la feuille à appliquer,

— et des moyens propres à chaque châssis d'entraînement en déplacement alternatif sur les glissières.

10. Machine selon la revendication 9, caractérisée en ce que le duo (12) de cylindres est associé à des moyens d'entraînement simultané des châssis d'une position de prise en charge à une position d'application en relation avec l'axe médian transversal du gabarit de pose.

11. Machine selon la revendication 9 ou 10, caractérisée en ce que chaque cylindre du duo comprend une structure fixe (50) entourée par une enveloppe cylindrique (56) perforée tournante avec laquelle elle délimite, intérieurement, des secteurs angulaires en relation avec des circuits de mise en pression et/ou en dépression.

12. Machine selon l'une des revendications 9 à 11, caractérisée en ce que les moyens (16) de collage localisé de la raie médiane sont disposés entre les cylindres du duo.

13. Machine selon l'une des revendications 9 à 11, caractérisée en ce que les moyens (16) de collage sont portés par la structure fixe du cylindre du duo considéré premier dans le sens de l'enveloppement de la feuille.

14. Machine selon l'une des revendications 9 à 11, caractérisée en ce que le duo de cylindres comprend un premier cylindre tournant (13) possédant une zone d'aspiration (13a) couvrant deux quarts angulaires successifs de sa périphérie et un second cylindre (14) tournant dans le même sens possédant, également, une zone d'aspiration (14a) couvrant deux quarts angulaires successifs de sa périphérie situés en opposition à ceux du premier cylindre par rapport au plan médian vertical du duo (P-P').

15. Machine selon l'une des revendications 9 à 11, caractérisée en ce que le duo de cylindres comprend un premier cylindre tournant (13) possédant une zone d'aspiration couvrant trois quarts successifs de sa périphérie et un second cylindre (14) tournant dans le sens contraire à celui du premier cylindre et possédant une zone d'aspiration couvrant sensiblement toute sa périphérie.

## Patentansprüche

1. Verfahren zur Bildung eines ebenen Stapels von Blättern von vorbestimmtem Format, die auf einer ihrer Seiten mit parallelen Klebestreifen mit konstantem Abstand (p) versehen sind, **dadurch gekennzeichnet**, daß es besteht aus :

Sicherstellen des wenigstens teilweisen Umhüllens bzw. Aufwickelns eines Blattes auf einer hierfür bestimmten Vorrichtung des Aufnehmens und Aufbringens, gebildet aus einem ersten und einem zweiten drehenden Zylinder, die parallel untereinander sind, die oberhalb einer Aufbringebene angeordnet sind, die eine Ablegeschablone definiert, deren Mittenachse bezogen ist, und die mit einem ersten Blatt bedeckt ist, wobei so vorgegangen wird, daß das zu stapelnde Blatt auf den ersten Zylinder mit seiner ohne Klebestreifen versehenen Seite aufgerollt wird,

Zählen der Anzahl der Klebestreifen, die während des Aufrollens vorbeiziehen,

Anhalten der Drehung der Zylinder, wenn der Mittenstreifen des Blattes gezählt ist und sich ungefähr senkrecht zur Mittenachse befindet,

Messen des Abstandes zwischen der Position dieser Reihe und der Mittenachse der Ablegeschablone,

Einstellen der Position der Vorrichtung, um den Mittenstreifen mit der Mittenachse vertikal übereinanderzulegen,

Anheben der Aufbringebene in Richtung der Vorrichtung,

Sicherstellen der Festlegung des auszustapelnden Blattes auf dem vorhergehenden durch lokalisierte Schmelzung des mittleren Klebestreifens,

Beabstanden der beiden Zylinder, um die beiden Halbabschnitte des zu stapelnden Blattes abzurollen und Aufbringen auf dem vorhergehenden,

Absenken der Aufbringebene,

Annähern der Zylinder, und

Aufnehmen eines nachfolgenden Blattes unter denselben Bedingungen unter Vorsehen zusätzlich nach der Maßnahme des Einstellens zwischen dem Mittelstreifen und der Mittelachse, einer Versetzung dieser Reihe bezüglich der Achse, abwechselnd eines Maßes, das gleich einem halben Schritt oder Abstand entspricht.

2. Verfahren nach Anspruch 1, **dadurch gekennzeichnet**, daß die Aufnahme eines jeden Blattes durch Ansaugen sichergestellt wird, ausgehend von den Zylindern, in Kombination mit der Drehung dieser letzteren.

3. Verfahren nach Anspruch 1 oder 2, **dadurch gekennzeichnet**, daß die Aufnahme eines jeden Blattes sichergestellt wird durch teilweises Aufrollen auf den Umfang eines jeden Zylinders.

4. Verfahren nach einem der Ansprüche 1 bis 3, **dadurch gekennzeichnet**, daß es daraus besteht, die Zylinder beiderseits der Aufbringstellung zu beabstanden unter Bewegung im wesentlichen parallel zu und in Berührung mit dem letzten aufgestapelten Blatt, Absenken der Aufbringebene und sodann Zurückbringen der Zylinder in die Aufnahmeposition.

5. Verfahren nach einem der Ansprüche 1 bis 4, **dadurch gekennzeichnet,** daß es daraus besteht, das Umhüllen oder Aufwickeln des aufzubringenden Blattes auf dem ersten Zylinder und auf im wesentlichen die Hälfte des Umfangs des letzteren, sodann auf den zweiten Zylinder, der sich in dieselbe Richtung wie der erste dreht und auch auf im wesentlichen die Hälfte des Umfangs des letzteren sicherzustellen.

6. Verfahren nach einem der Ansprüche 1 bis 4, **dadurch gekennzeichnet,** daß es daraus besteht, das Umhüllen oder Aufwickeln des aufzubringenden Blattes auf den ersten Zylinder und auf im wesentlichen Dreiviertel des Umfangs des letzteren, sodann auf den zweiten Zylinder, der sich in umgekehrter Richtung zum ersten dreht, und auf ungefähr ebenfalls Dreiviertel des Umfangs des letzteren, sicherzustellen.

7. Verfahren nach einem der Ansprüche 1 bis 3 und 6, **dadurch gekennzeichnet,** daß es daraus besteht, die beiden Zylinder, ausgehend von der Aufbringstellung, zu beabstanden, indem sie im wesentlichen parallel und in Berührung mit dem letzten gestapelten Blatt bewegt werden, die beiden Zylinder anzuheben, den zweiten Zylinder in die Ausnahmestellung zu bringen und den ersten Zylinder in die Aufbringstellung zu bringen, den ersten Zylinder gegen das eben aufgebrachte Blatt abzusenken, den ersten Zylinder in Richtung der Aufnahmestellung gegen die zweite Hälfte des gerade aufgebrachten Blattes zu bewegen, den ersten Zylinder wegzubewegen und ihn sodann in die Aufnahmestellung zu bewegen in der Nähe des zweiten Zylinders.

8. Verfahren nach Anspruch 6 oder 7, **dadurch gekennzeichnet,** daß die Festlegung des Blattes nach Aufwickeln und vor dem Beabstanden der Zylinder sichergestellt wird durch eine Heizeinrichtung, die von dem ersten Zylinder getragen wird.

9. Vorrichtung zur Durchführung des Verfahrens nach einem der Ansprüche 1 bis 8 mit:

— einer horizontalen Aufbringebene (5), die von Anhebe-Absenkeinrichtungen (9) getragen wird und eine Ablegeschablone (6) begrenzen, die eine Mittelquerachse (7) definiert,

— einer einzelnen daübergestellten Zuführeinrichtung (10) von Blättern (1), die Klebestreifen (2) tragen, die auf der Ebene mit ihrer nichtklebenden Seite ruhen,

— einem Paar (12) von Saugzylindern (13,14) mit horizontal parallelen Achsen zwischen den beiden Ebenen, die beiderseits einer vertikalen Mittenebene (P-P') angeordnet sind, die auf Chassis (31, 32) angebracht sind, die von zwei zur Abringebene parallelen Gleitschienensystemen (30) getragen werden, und mit Saugeinrichtungen (49) verbunden sind,

— Einrichtungen (15) zum Zählen des mittleren Klebestreifens (x-x') eines jeden Blattes in bezug auf die Referenzstellung der mittleren Querachse der Schablone,

— Indexierungs- und gleichzeitige Flanschungseinrichtungen (35, 36) der Chassis in eine Referenzstellung des mittleren Klebestreifens eines jeden Blattes bezüglich der Mittelachse der Schablone der Aufbringebene,

— ortsbestimmende Klebeeinrichtungen (16) des Mittelstreifens des aufzubringenden Blattes,

— und einem jeden Chassis zugehörende Antriebseinrichtungen der abwechselnden Bewegungen auf den Gleitschienen.

10. Vorrichtung nach Anspruch 9, **dadurch gekennzeichnet,** daß das Zylinderpaar (12) mit gleichzeitigen Antriebseinrichtungen der Chassis verbunden sind von einer Aufnahmeeinrichtung zu einer Aufbringeinrichtung in bezug auf die Quermittelachse der Ablegeschablone.

11. Vorrichtung nach Anspruch 9 oder 10, **dadurch gekennzeichnet,** daß jeder Zylinder des Paares eine feste Struktur (50) aufweist, die durch eine zylindrische Umhüllung (56), die drehend und perforiert ist, umgeben ist, mit der sie innen Winkelsektoren in Bezug zu Kreisen des Unter-Druck-Setzens und/oder unter Druckentlastung-Setzens begrenzt.

12. Vorrichtung nach einem der Ansprüche 9 bis 11, **dadurch gekennzeichnet,** daß die ortsbestimmenden Klebeeinrichtungen (16) des Mittelstreifens zwischen dem Zylinderpaar angeordnet sind.

13. Vorrichtung nach einem der Ansprüche 9 bis 11, **dadurch gekennzeichnet,** daß die Klebeeinrichtungen (16) von der festen Struktur des Zylinders als erstes in Umwickelrichtung des Blattes betrachteten Paares getragen wird.

14. Vorrichtung nach einem der Ansprüche 9 bis 11, **dadurch gekennzeichnet,** daß das Zylinderpaar einen ersten Drehzylinder (13) aufweist, der eine Ansaugzone (13a) besitzt, die zwei aufeinanderfolgende Winkelviertel seines Umfangs bedeckt, und einen zweiten Zylinder (14) aufweist, der in dieselbe Richtung dreht mit ebenfalls einer Ansaugzone (14a), die zwei winkelige aufeinanderfolgende Viertel seines Umfangs bedeckt, die gegenüber jenen des ersten Zylinders bezüglich einer vertikalen Mittenebene des Paares (P-P') angeordnet sind.

15. Vorrichtung nach einem der Ansprüche 9 bis 11, **dadurch gekennzeichnet,** daß das Zylinderpaar einen ersten drehenden Zylinder (13) aufweist, der eine Ansaugzone besitzt, die drei aufeinanderfolgende Viertel seines Umfangs bedeckt und einen zweiten Zylinder (14) aufweist, der sich in die Gegenrichtung zu dem ersten Zylinder dreht, und eine Ansaugzone aufweist, die im wesentlichen seinen gesamten Umfang überdeckt.

## Claims

1. A method for forming a flat stack of sheets of predetermined format, each of said sheets being provided on one of its faces with parallel stripes of glue at a constant pitch or interval (p), characterized in that it consists in :
— bringing the work surface towards said device;
— fixing the sheet to be stacked on the preceding sheet by localized melting of the middle stripe of glue ;
— separating the two cylinders to unwrap the two halves of the sheet to be stacked and to apply them against the preceding sheet ;
— lowering the work surface ;
— moving the cylinders towards each other ; and
— picking up the next sheet under the same conditions and, additionally, ensuring that after adjusting the position of the middle stripe relative to the median axis, said stripe is offset in alternation relative to said axis through a distance equal to one half of the pitch.
— wrapping at least a portion of a sheet over a pick-up and applicator device constituted by first and second mutually parallel rotary cylinders disposed over a work surface defining a laying template whose median axis is referenced and which is provided with a first sheet, such that the sheet to be stacked is wound over the first cylinder making contact therewith via its face which does not include stripes of glue ;
— counting the number of stripes of glue that pass while the sheet is being wrapped onto the device ;
— stopping cylinder rotation when the detected middle stripe of the sheet is located approximately vertically over the median axis ;
— measuring the error between the position of said middle stripe and the median axis of the laying template ;
— adjusting the position of said device to cause said middle strip to coincide vertically with the median axis ;
— bringing the work surface and said device closer to each other ;
— fixing the sheet to be stacked on the preceding sheet by localized melting of the middle stripe of glue ;
— separating the two cylinders to unwrap the two halves of the sheet to be stacked and to apply them against the preceding sheet ;
— moving the work surface and said device apart from each other ;
— moving the cylinders towards each other ; and
— picking up the next sheet under the same conditions and, additionally, ensuring that after adjusting the position of the middle stripe relative to the median axis, said stripe is offset in alternation relative to said axis through a distance equal to one half of the pitch.

2. Method according to claim 1, characterized in that each sheet is picked up by a suction effect from the cylinders in combination with the cylinders rotating.

3. Method according to claim 1 or 2, characterized in that each sheet is picked up by being wrapped in part around the periphery of each cylinder.

4. Method according to one of claims 1 to 3, characterized in that it includes moving the cylinders away from each other on either side of the application position, displacing them substantially in parallel and in contact with the last sheet to be stacked, in lowering the work surface, and then in returning the cylinders to their initial pick-up position.

5. Method according to any one of claims 1 to 4, characterized in that it includes wrapping the sheet to be applied around the first cylinder and over substantially one half of the periphery of the latter, then around the second cylinder and over substantially one half of the periphery of the latter which is rotating in the same direction as the first.

6. Method according to one of claims 1 to 4, characterized in that it includes wrapping the sheet to be applied around substantially three quarters of the periphery of the first cylinder and then around substantially three quarters also the periphery of the second cylinder which is rotating in the opposite direction to the first.

7. Method according to one of claims 1 to 3 and 6, characterized in that it includes moving the cylinders apart from each other away from the application position, in displacing them substantially in parallel and in contact with the last sheet to be stacked, in raising both cylinders, in returning the second cylinder to its pick-up position and returning the first cylinder to its application position, in lowering the first cylinder against the sheet which has just been applied, in displacing the first cylinder towards the pick-up position while against the second half of the sheet which has just been applied, and in raising said first cylinder and returning it to its pick-up position in the vicinity of the second cylinder.

8. Method according to claim 6 or 7, characterized in that the sheet is fixed in position after being wrapped around said device and prior to the cylinders being moved apart, by heater means carried by the first cylinder.

9. Machine for implementing the method according to any one of claims 1 to 8, comprising :
— a horizontal work surface (5) carried by raising and lowering means (9) and delimiting a laying template (6) defining a median transverse axis (7) ;

— a superposed delivery plane (10) for conveying individual sheets (1) bearing stripes of glue (2) and having their non-glued face lying on said plane ;

— a pair (12) of horizontal axis suction cylinders (13, 14) lying between said conveyor plane and said work surface, said cylinders being disposed on either side of a vertical median plane (P-P'), and being mounted on frames (31, 32) carried by two slideway systems (30) extending parallel to the work surface, and connected to suction means (49) ;

— means (15) for counting up to the middle glue stripe (x-x') of each sheet relative to the reference position of the transverse median axis of the template ;

— means (35, 36) for simultaneously indexing and clamping the frames in a reference position for the middle glue stripe of each sheet relative to the median axis of the work surface template ;

— means (16) for localized gluing of the middle stripe of the sheet to be applied ; and

— drive means individual to each chassis and suitable for alternating displacement along the slideways.

10. Machine according to claim 9, characterized in that the pair (12) of cylinders is associated with means for simultaneously driving the frame from a pick-up position to an application position relative to the transverse median axis of the laying template.

11. Machine according to claim 9 or 10, characterized in that each cylinder of the pair comprises a fixed structure (50) surrounded by a rotary perforated cylindrical envelope (56) together with which it delimits internal annular sectors which are in communication with pressure and/or suction circuits.

12. Machine according to one of claims 9 to 11, characterized in that the means (16) for localized gluing of the middle stripe are disposed between the cylinders of the pair.

13. Machine according to one of claims 9 to 11, characterized in that the means (16) for localized gluing of the middle stripe are carried by the fixed structure of the first cylinder of the pair encountered in the sheet-wrapping direction.

14. Machine according to one of claims 9 to 11, characterized in that the pair of cylinders comprise a first rotary cylinder (13) having a suction zone (13a) extending over two successive fourths of its periphery, and a second rotary cylinder (14) rotating in the same direction and likewise having a suction zone (14a) extending over two successive angular fourths of its periphery and situated on the opposite side thereof about the vertical median plane of the pair (P-P') compared with the suction fourths of the first cylinder.

15. Machine according to one of claims 9 to 11, characterized in that the pair of cylinders comprise a first rotary cylinder (13) having a suction zone extending over three successive fourths of its periphery, and a second rotary cylinder (14) for rotating in the opposite direction to the first cylinder and having a suction zone extending over substantially all of its periphery.

Fig-1

Fig-2

Fig-3

Fig-16

Fig-4

Fig-5

Fig-6

Fig-7

Fig-8

Fig-9

Fig.10

Fig.11

Fig.12

Fig.13

Fig.14

EP 0 299 885 B1

Fig_15

EP 0 299 885 B1